# EUROPÄISCHE PATENTSCHRIFT

(11) **EP 3 183 090 B1**
(45) Veröffentlichungstag und Bekanntmachung des Hinweises auf die Patenterteilung: **25.04.2018**
(21) Anmeldenummer: 15747401.6
(22) Anmeldetag: 23.07.2015
(51) Int. Cl.: B23K 26/00, B41J 3/407, B65G 47/06, B65G 59/06, B65H 1/06, G09F 3/00, H01R 13/46, B23K 26/364, B23K 103/00, B23K 101/36

(54) **VORRICHTUNGEN ZUR BESCHRIFTUNG VON KENNZEICHNUNGSEINHEITEN MIT EINEM EINE GENEIGTE RUTSCHBAHN AUFWEISENDEN FALLSCHACHT**
DEVICE FOR INSCRIBING IDENTIFICATION UNITS, COMPRISING A DROP SHAFT WITH AN INCLINED CHUTE
DISPOSITIF DE MARQUAGE D'UNITÉS D'IDENTIFICATION COMPRENANT UNE GOULOTTE PRÉSENTANT UN CHEMIN D'ÉCOULEMENT INCLINÉ

(30) Priorität: 18.08.2014 DE 102014012055
(43) Veröffentlichungstag der Anmeldung: 28.06.2017
(73) Patentinhaber: Murrplastik Systemtechnik GmbH, 71570 Oppenweiler (DE)
(72) Erfinder: BIER, Klaus-Dieter, 71397 Leutenbach (DE); BRÄUSS, Marco, 74354 Besigheim (DE); UTESCH, Rainer, 22455 Hamburg (DE); BRIEGE, Stephan, 22846 Norderstedt (DE)
(74) Vertreter: Patentanwälte Bregenzer und Reule Partnerschaftsgesellschaft mbB
(86) Internationale Anmeldenummer: PCT/EP2015/066843
(87) Internationale Veröffentlichungsnummer: WO 2016/026648

(56) Entgegenhaltungen:
- WO-A1-2015/144392
- DE-A1- 19 726 237
- US-A1- 2011 031 227
- US-B1- 7 427 003

## Beschreibung

Die Erfindung betrifft Vorrichtungen zur Beschriftung von Kennzeichnungseinheiten, wobei jede Kennzeichnungseinheit ein Kennzeichnungsschild oder mehrere, einstückig zusammenhängende Kennzeichnungsschilder aufweist, gemäß dem Oberbegriff der Ansprüche 1 und 9 (siehe z.B. DE197 26 237 A1). Kennzeichnungsschilder werden häufig zur Kennzeichnung von Bauelementen verwendet. Sie weisen hierzu eine Beschriftungsfläche auf, auf die eine Beschriftung aufgebracht werden kann, die das zu kennzeichnende Bauteil bezeichnet. Insbesondere Kabel werden häufig mit Kennzeichnungsschildern versehen, die beispielsweise mittels auf die Kabel aufgeschobener Tüllen befestigt werden und die Kabel kennzeichnende Beschriftungen tragen. Zur Anbringung der Beschriftung auf der jedem Kennzeichnungsschild eigenen Beschriftungsfläche sind verschiedenste Geräte bekannt, beispielsweise Laserdrucker, Thermotransferdrucker, Plotter oder Graviergeräte. Allen ist gemeinsam, dass die Kennzeichnungsschilder dem Beschriftungsgerät zugeführt werden müssen. Dies erfolgt meist manuell, indem die Kennzeichnungsschilder einzeln oder als Kennzeichnungsschildersätze einstückig zusammenhängend auf eine Auflagefläche aufgelegt und dort beschriftet werden. Dies ist aufwendig. Wird ein Laserdrucker verwendet, so ist dieser aus Gründen der Arbeitssicherheit noch gegenüber der Umgebung abzuschirmen, indem er beispielsweise in einem geschlossenen Gehäuse angeordnet wird, in das die zu beschriftenden Kennzeichnungsschilder eingelegt werden müssen.
Es ist daher Aufgabe der Erfindung, eine Vorrichtung der eingangs genannten Art zu entwickeln, die eine einfachere Beschriftung der Kennzeichnungsschilder ermöglicht.
Diese Aufgabe wird erfindungsgemäß durch eine Vorrichtung mit den Merkmalen des Anspruchs 1, alternativ durch eine Vorrichtung mit den Merkmalen des Anspruchs 9 gelöst. Vorteilhafte Weiterbildungen der Erfindung sind Gegenstand der abhängigen Ansprüche. Ein Verfahren zur Beschriftung von Kennzeichnungsschildersätzen unter Verwendung einer Vorrichtung nach einem der Ansprüche 1 bis 8 ist im Anspruch 13 definiert. Ansprüche 14-15 definieren weitere bevorzugte Merkmale/Schritte dieses Verfahrens. Der Erfindung liegt der Gedanke zugrunde, die Kennzeichnungseinheiten, die ein Kennzeichnungsschild oder mehrere einstückig zusammenhängende Kennzeichnungsschilder aufweisen können, über die Eintrittsöffnung in das Gehäuse einzuführen, wo sie im Fallschacht die Rutschbahn(en) hinunterrutschen und mit einer Kante auf der Auflagefläche zur Auflage kommen. Anschließend werden sie mittels des Gegenhalters gegen den Anschlagblock in eine Beschriftungsposition gedrückt, so dass sie definiert positioniert sind. Insbesondere dann, wenn ein Laserbeschriftungsgerät verwendet wird, ist diese Positionierung vorteilhaft. Es wird dann bevorzugt, dass die durch die Beschriftungsfläche(n) aufgespannte Beschriftungsebene einer in der Beschriftungsposition befindlichen Kennzeichnungseinheit mit der Fokusebene des Laserbeschriftungsgeräts zusammenfällt.
Zweckmäßig weist der Anschlagblock eine Anschlagfläche zum Andrücken von auf der Auflagefläche aufliegenden Kennzeichnungseinheiten auf. Ein flächiges Andrücken an den Anschlagblock erhöht die Präzision beim Positionieren. Desweiteren wird bevorzugt, dass der Fallschacht durch zwei in entgegengesetzte Richtungen gegenüber der Vertikalen geneigte Rutschbahnen begrenzt wird, wobei eine erste Rutschbahn unter der Eintrittsöffnung angeordnet ist und sich auf die zweite Rutschbahn zu schräg nach unten erstreckt. Beim Übergang von der ersten Rutschbahn auf die zweite Rutschbahn werden die Kennzeichnungseinheiten gewendet, so dass sie beispielsweise auf der ersten Rutschbahn mit ihrer bzw. ihren Beschriftungsfläche(n) anliegen, während beim Anliegen auf der zweiten Rutschbahn die zu beschriftende(n) Beschriftungsfläche(n) von der Rutschbahn weg weist bzw. weisen. Dabei ist es möglich, dass beide Rutschbahnen unter Freilassung einer Umlenkpartie des Fallschachts im Abstand zueinander gehäusefest angeordnet sind. Es ist jedoch auch möglich, dass die erste Rutschbahn um eine parallel zur zweiten Rutschbahn horizontal verlaufende, gehäusefeste Schwenkachse zur Freigabe und Sperrung einer Umlenkpartie des Fallschachts hin und her verschwenkbar ist. Dabei kann die zweite Rutschbahn gehäusefest angeordnet sein.

Zweckmäßig wird die Auflagefläche durch mehrere im Abstand zueinander und vorzugsweise quer zur Anschlagfläche verlaufende Auflagerippen gebildet. Zwischen den Auflagerippen können in der Beschriftungsposition etwaige Anspritzpunkte der Kennzeichnungseinheiten angeordnet werden, so dass diese in ihrer Beschriftungsposition nicht schief auf der Auflagefläche aufliegen. Zudem kann der Anschlagblock aus einem transparenten Material, insbesondere aus Plexiglas (PMMA), gefertigt sein, so dass auch durch den Anschlagblock hindurch eine Beschriftung der Kennzeichnungseinheiten mittels eines Laserbeschriftungsgeräts erfolgen kann.

Gemäß einer vorteilhaften Weiterbildung weist der Gegenhalter eine dem Anschlagblock zugewandte Gegenhalterfläche sowie mindestens eine in Richtung zum Anschlagblock vorstehende Seitenpartie auf, wobei jede Seitenpartie, ausgehend von der Gegenhalterfläche, eine Seitenfläche aufweist, die mit der Gegenhalterfläche entlang einer Verbindungskante einen stumpfen Winkel einschließt. Durch diese Maßnahme wird nicht nur eine exakte Positionierung der Kennzeichnungseinheiten mit der Beschriftungsebene in der Fokusebene eines Laserbeschriftungsgeräts ermöglicht, sondern auch eine exakte Positionierung quer zur Vorschubrichtung des Gegenhalters, indem beim Vorschieben der Kennzeichnungseinheit zum Anschlagblock und Andrücken am Anschlagblock die Kennzeichnungseinheit an der Seitenfläche abgleitet, bis sie an der Gegenhalterfläche anliegt und mit einer Kante an der Verbindungskante zwischen der Gegenhalterfläche und der Seitenfläche positioniert ist. Dabei wird bevorzugt, dass die Anschlagfläche, die Gegenhalterfläche und die Seitenfläche(n) jeweils vertikal verlaufen. Es können Seitenpartien auf beiden Seiten des Gegenhalters vorgesehen sein, wobei die Verbindungskanten zwischen der Gegenhalterfläche und den Seitenflächen exakt an die Abmessungen der Kennzeichnungseinheiten angepasst sind. Es ist jedoch meist ausreichend, wenn nur auf einer Seite des Gegenhalters eine Seitenpartie angeordnet ist, wenn die Kennzeichnungseinheiten so auf die Auflagefläche aufgelegt werden, dass sie beim Vorschieben des Gegenhalters an der Seitenpartie zur Anlage kommen.

Gemäß einer vorteilhaften Weiterbildung der Erfindung ist die zweite Rutschbahn an ihrem unteren Rand mit einer Auflagerinne für die Kennzeichnungseinheiten versehen und um eine gehäusefeste horizontale Kippachse in eine Kippstellung kippbar, in der die Auflagerinne nach oben weist. Das Kippen der zweiten Rutschbahn ermöglicht dann einen Weitertransport von beschrifteten Kennzeichnungseinheiten, indem die zweite Rutschbahn gekippt wird, wobei die jeweilige Kennzeichnungseinheit mit ihrer unteren Kante in der Auflagerinne liegt und mitgenommen wird, bis die zweite Rutschbahn in einer entgegengesetzten Richtung geneigt ist, so dass die jeweilige Kennzeichnungseinheit von der Auflagerinne weg über die zweite Rutschbahn hinunterrutschen kann. Um den Vorgang des Andrücken der Kennzeichnungseinheiten an den Anschlagblock nicht zu stören, ist in der Auflagefläche zweckmäßig eine Vertiefung zur Aufnahme der Auflagerinne angeordnet.

Die in Anspruch 14 wiedergegebene alternative Ausführungsform sieht vor, dass die Kennzeichnungseinheiten über eine Rutschbahn im Fallschacht hinunterrutschen und mittels einer Halteeinrichtung in einer Beschriftungsposition gehalten werden. Die Halteeinrichtung weist eine gegenüber der Horizontalen geneigte, vorzugsweise vertikal angeordnete Anlagefläche zur flächigen Anlage der Kennzeichnungseinheiten auf sowie eine sich an den unteren Rand der Anlagefläche anschließende Auflagerinne zum Auflegen einer Kante der Kennzeichnungseinheiten. Die Halteeinrichtung ist zudem um eine gehäusefeste horizontale Kippachse in eine Kippstellung kippbar, in der die Auflagerinne nach oben weist. Dies entspricht einer Ausgestaltung einer kippbaren zweiten Rutschbahn wie oben beschrieben mit dem Unterschied, dass die Auflagefläche nicht ortsfest angeordnet ist, sondern in der Auflagerinne. Dabei kann die Auflagerinne vorteilhaft an ihren beiden Enden mit sich in ihrer Längserstreckung aufeinander zu zu einem Rinnenboden erstreckenden Schrägen versehen sein, so dass eine selbsttätige Positionierung der in die Auflagerinne fallenden Kennzeichnungseinheiten erfolgt, indem diese die Schrägen hinunterrutschen und in der Auflagerinne zentriert werden. Der Rinnenboden kann dann so an die Breite der Kennzeichnungseinheiten angepasst werden, dass diese exakt zwischen den Enden der Schrägen positioniert werden. Zudem kann ein Aufnahmebehälter für beschriftete Kennzeichnungseinheiten vorgesehen sein, auf den sich die zweite Rutschbahn (bei einer Ausgestaltung gemäß Anspruch 1 mit kippbarer zweiter Rutschbahn) bzw. die Anlagefläche in der Kippstellung zu erstreckt. Die Auflagerinne kann zudem aus mehreren, im Abstand zueinander angeordneten Abschnitten bestehen und muss nicht durchgehend ausgestaltet sein.
Um mehrere einstückig zusammenhängende Kennzeichnungsschilder aufweisende Kennzeichnungsschildersätze in die Beschriftungsposition zu bringen, werden diese vorzugsweise einzeln über die Eintrittsöffnung in den Fallschacht eingeführt und rutschen mit ihren Beschriftungsköpfen voran die mindestens eine schiefe Ebene hinunter, bis sie mit den Beschriftungsköpfen auf der Auflagefläche aufliegen. Um die Kennzeichnungseinheiten einzeln in den Fallschacht einzuführen, kann die erfindungsgemäße Vorrichtung eine Schieberanordnung aufweisen, wie sie in der älteren, offengelegten Anmeldung DE 10 2014 004 353.3 beschrieben ist, auf deren Offenbarungsgehalt in diesem Zusammenhang ausdrücklich verwiesen wird. Die Höhe des Anschlagblocks kann zudem so an die Größe der Beschriftungsköpfe der Kennzeichnungsschildersätze angepasst sein, dass die Beschriftungsköpfe eines in der Beschriftungsposition befindlichen Kennzeichnungsschildersatzes nach oben über ein oberes Ende des Anschlagblocks hinausragen, so dass allenfalls die Beschriftungsköpfe vom Anschlagblock verdeckt werden.
Im Folgenden wird die Erfindung anhand eines in der Zeichnung schematisch dargestellten Ausführungsbeispiels näher erläutert. Es zeigen
- Fig. 1: eine schematische Darstellung einer Beschriftungsvorrichtung in perspektivischer Ansicht;
- Fig. 2: die Beschriftungsvorrichtung gemäß Fig. 1 mit einer Kennzeichnungseinheit in der Beschriftungsposition;
- Fig. 3: die Beschriftungsvorrichtung gemäß Fig. 1 mit der zweiten Rutschbahn in der Kippstellung und
- Fig. 4a, 4b: eine Darstellung des Prinzips des Andrückens einer Kennzeichnungseinheit an den Anschlagblock mittels des Gegenhalters in Draufsicht.

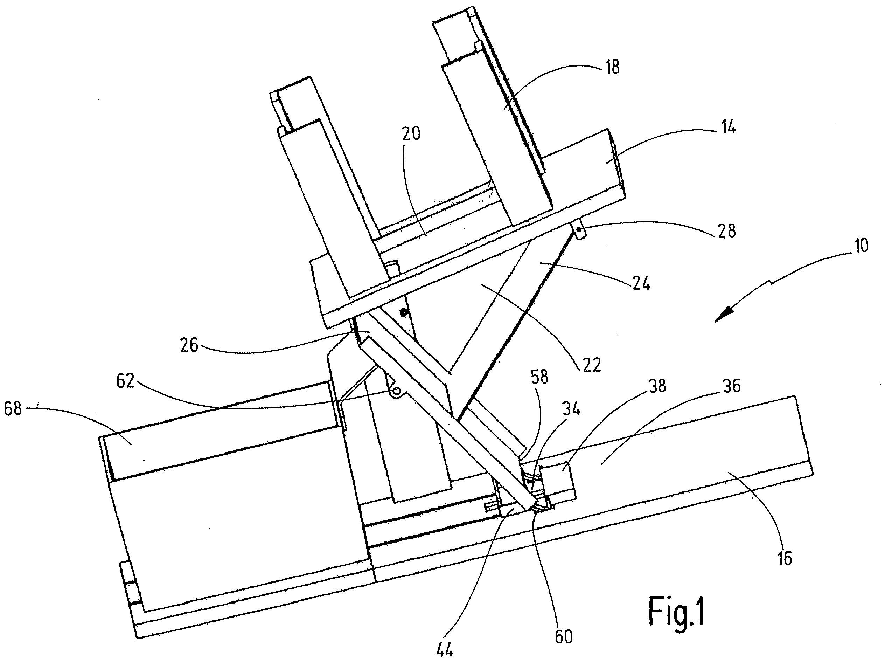

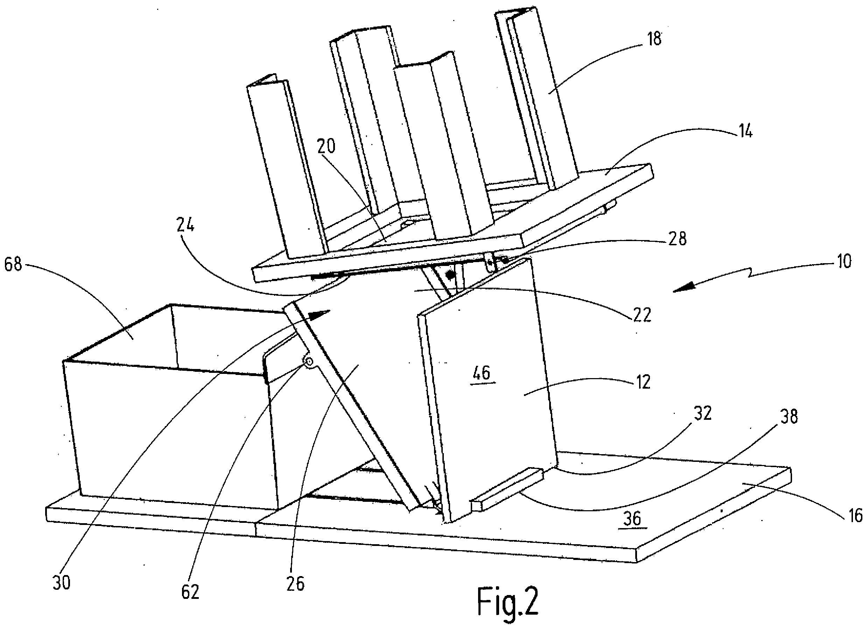

Die in Fig. 1 bis 3 schematisch dargestellte Beschriftungsvorrichtung 10 dient der Beschriftung von Kennzeichnungseinheiten, wobei beispielhaft in Fig. 2 eine Kennzeichnungseinheit 12 gezeigt ist, die der Einfachheit der Darstellung halber als einstückige Platte dargestellt ist. Die Beschriftungsvorrichtung 10 weist ein Gehäuse auf, von dem der Einfachheit halber lediglich ein Teil einer Deckenwand 14 und eine Bodenwand 16 dargestellt sind, und in dem ein in der Zeichnung nicht näher dargestelltes Laserbeschriftungsgerät aufgenommen und zur Verhinderung des Austritts von Laserlicht eingeschlossen ist. Auf der Deckenwand 14 ist ein Magazin 18 zur Aufnahme von unbeschrifteten Kennzeichnungseinheiten 12 angeordnet, unter dem die Deckenwand 14 eine Eintrittsöffnung 20 aufweist, über die die Kennzeichnungseinheiten 12 einzeln einem Fallschacht 22 zugeführt werden können, insbesondere wie in der älteren Anmeldung DE 10 2014 004 353.3 beschrieben. Der Fallschacht 22 wird durch eine unter der Eintrittsöffnung 20 angeordnete erste Rutschbahn 24 sowie eine zweite Rutschbahn 26 begrenzt, welche jeweils sowohl gegenüber der Horizontalen als auch gegenüber der Vertikalen geneigt sind. Die erste Rutschbahn 24 verläuft dabei auf die zweite Rutschbahn 26 zu. Die Neigung gegenüber der Vertikalen ist bei den Rutschbahnen 24, 26 entgegengesetzt, so dass in der in Fig. 1 gezeigten Perspektive eine Kennzeichnungseinheit 12 die erste Rutschbahn 24 nach links unten, die zweite Rutschbahn 26 nach rechts unten hinunter rutscht.

Bei der in der Zeichnung dargestellten Ausführungsform ist, wenn sich die erste Rutschbahn 24 in der in Fig. 1 gezeigten Position befindet, zwischen beiden Rutschbahnen 24, 26 nicht genug Platz, um einen Durchtritt der Kennzeichnungseinheiten 12 zu ermöglichen. Zu diesem Zweck ist die erste Rutschbahn 24 um eine gehäusefeste Schwenkachse 28 nach oben verschwenkbar, wie in Fig. 2 dargestellt, so dass eine Umlenkpartie 30 des Fallschachts 22 freigegeben wird und die betreffende Kennzeichnungseinheit 12 auf die zweite Rutschbahn 26 übergeben wird, auf der sie hinunter rutscht, bis ihre untere Kante 32 auf einer Auflagefläche 34 aufliegt, welche eine Auflageebene 36 aufspannt. Aus der Auflageebene 36 steht ein Anschlagblock 38 mit einer vertikal verlaufenden Anschlagfläche 40 vor, der eine Begrenzung der Auflagefläche 34 in einer Vorschubrichtung 42 bildet. Zudem ist ein Gegenhalter 44 vorgesehen, der in der Vorschubrichtung 42 auf den Anschlagblock 38 zu und in der Gegenrichtung von diesem weg beweglich ist. Der Gegenhalter 44 dient dazu, auf der Auflagefläche 34 aufliegende Kennzeichnungseinheiten 12 gegen die Anschlagfläche 40 zu drücken und in der so definierten, in Fig. 2 gezeigten Beschriftungsposition zu fixieren, in der eine durch eine Beschriftungsfläche der Kennzeichnungseinheit 12, die der Anbringung einer Beschriftung mittels des Laserbeschriftungsgeräts dient, aufgespannte Beschriftungsebene 46 mit der Fokusebene des Laserbeschriftungsgeräts zusammen fällt.

An dieser Stelle ist zu bemerken, dass die in Fig. 2 gezeigte Kennzeichnungseinheit 12 zwar der Einfachheit halber als Platte dargestellt ist, dass aber in der Regel Kennzeichnungseinheiten zu beschriften sind, die mehrere einstückig zusammenhängende Kennzeichnungsschilder aufweisen. Meist weisen solche Kennzeichnungsschildersätze zudem einstückig mit den Kennzeichnungsschildern verbundene Beschriftungsköpfe auf, die bevorzugt auf die Auflagefläche 34 aufgelegt und zwischen dem Anschlagblock 38 und dem Gegenhalter 44 fixiert werden. Die Beschriftungsebene 46 wird dann durch die zu beschriftenden Flächen der Kennzeichnungsschilder und gegebenenfalls der Beschriftungsköpfe aufgespannt. Ein typischer Kennzeichnungsschildersatz der Anmelderin ist in der DE 37 44 936 C2 beschrieben, auf die in diesem Zusammenhang Bezug genommen wird, und in der die beschriftungsköpfe als "Plättchen" bezeichnet werden.

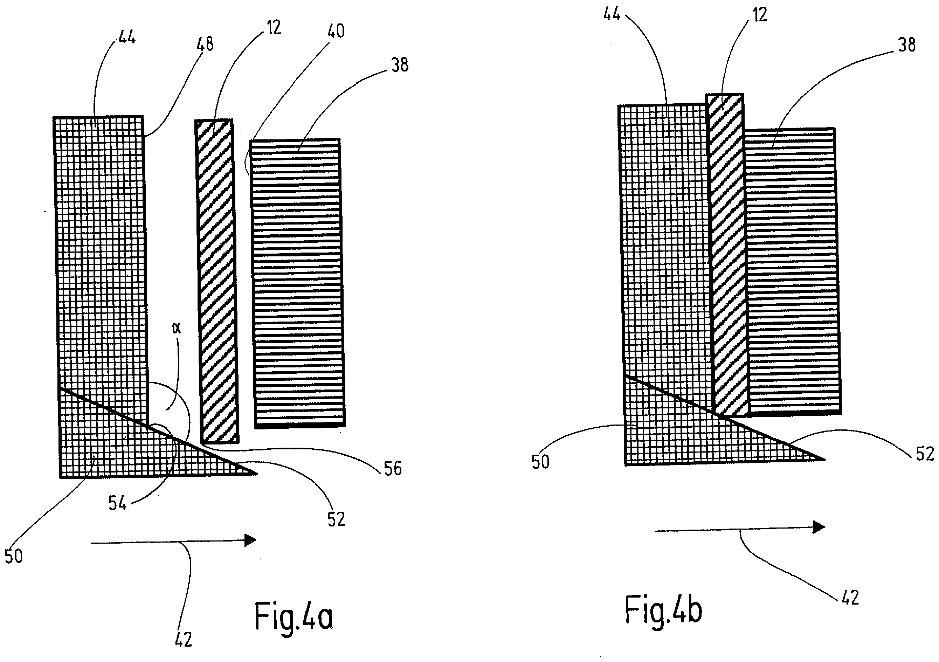

Der Gegenhalter 44 weist zum einen eine der Anschlagfläche 40 zugewandte und zu dieser parallel verlaufende Gegenhalterfläche 48 auf. Er weist zudem eine Seitenpartie 50 auf, die sich in Richtung zum Anschlagblock 38 verjüngt und eine Seitenfläche 52 aufweist, die entlang einer Verbindungskante 54 mit der Gegenhalterfläche 48 verbunden ist und mit dieser einen stumpfen Winkel α einschließt. Beim Bewegen des Gegenhalters 44 in der Vorschubrichtung 42 auf den Anschlagblock 38 zu kommt eine Seitenkante 56 der Kennzeichnungseinheit 12 an der Seitenfläche 52 zur Anlage und gleitet auf dieser ab, bis sie an der Verbindungskante 54 zur Anlage kommt, wie in Fig. 4b gezeigt. Auf diese Weise wird die Kennzeichnungseinheit durch Auflage auf der Auflagefläche 34, Anlage an der Anschlagfläche 40 und Anlage an der Verbindungskante 54 in allen Raumrichtungen exakt positioniert, so dass sie mit hoher Genauigkeit durch das Laserbeschriftungsgerät beschriftet werden kann.

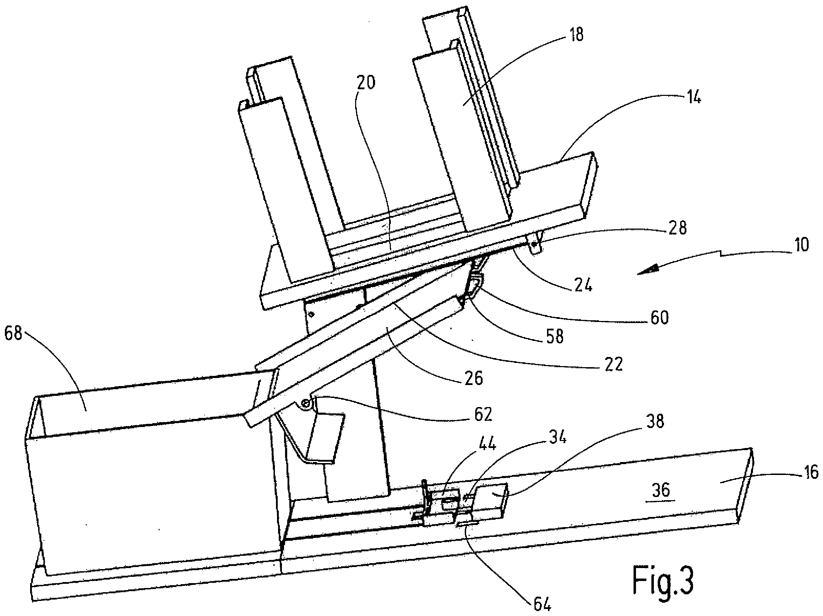

Die zweite Rutschbahn 26 ist an ihrem unteren Rand 58 mit einer Auflagerinne 60 versehen und zudem um eine gehäusefeste horizontal verlaufende Kippachse 62 von der in Fig. 2 gezeigten Stellung, in der die Auflagerinne 60 in eine Vertiefung 64 in der Auflagefläche 34 eintaucht, in eine in Fig. 3 gezeigte Kippstellung kippbar, in der die Auflagerinne 60 nach oben weist. In der Kippstellung ist die zweite Rutschbahn 26 bezüglich der Vertikalen in die entgegengesetzte Richtung geneigt, so dass eine auf ihr liegende Kennzeichnungseinheit 12 von der Auflagerinne 60 weg hinunter rutschen kann. In der Kippstellung verläuft die zweite Rutschbahn 26 zudem auf einen Aufnahmebehälter 68 zu, der dafür bestimmt ist, beschriftete Kennzeichnungseinheiten 12 aufzunehmen. Die Auflagerinne 60 verhindert dabei, dass die auf der zweiten Rutschbahn 26 liegende Kennzeichnungseinheit 12 während des Kippvorgangs in der falschen Richtung, also zur Auflagefläche 34 hin, hinunter rutscht.

Gemäß einer zeichnerisch nicht dargestellten alternativen Ausführungsform kann die Auflagefläche 34 durch einen Boden der Auflagerinne 60 gebildet werden. Eine Positionierung entlang der Unterkante 32 der Kennzeichnungseinheit 12 kann dadurch erfolgen, dass die Auflagerinne 60 zu ihren beiden Enden mit sich zu einem Rinnenboden hin nach unten erstreckenden Schrägen versehen ist, auf denen die Kennzeichnungseinheit 12 abgleiten kann, bis sie in der an ihre Abmessungen angepassten Auflagerinne 60 auf dem Rinnenboden aufliegt. Auch durch diese Maßnahme ist die Kennzeichnungseinheit 12 definiert positioniert und kann mittels des Laserbeschriftungsgeräts beschriftet werden, ohne dass es eines Anschlagblocks und eines Gegenhalters bedarf, wie im zeichnerisch dargestellten Ausführungsbeispiel.

Zusammenfassend ist folgendes festzuhalten: Die Erfindung betrifft eine Vorrichtung 10 zur Beschriftung von Kennzeichnungseinheiten 12, wobei jede Kennzeichnungseinheit 12 ein Kennzeichnungsschild oder mehrere, einstückig zusammenhängende Kennzeichnungsschilder aufweist, wobei jedes Kennzeichnungsschild eine Beschriftungsfläche aufweist und wobei die Beschriftungsfläche oder mehrere der Beschriftungsflächen jeder Kennzeichnungseinheit 12 eine Beschriftungsebene 46 aufspannt bzw. aufspannen, mit einem Gehäuse 14, 16, mit einem im Gehäuse 14, 16 angeordneten Beschriftungsgerät, insbesondere einem Laserbeschriftungsgerät, mit einem im Gehäuse 14, 16 angeordneten, über eine Eintrittsöffnung 20 im Gehäuse 14 zugänglichen Fallschacht 22 zum Transport einzelner Kennzeichnungseinheiten 12 zum Beschriftungsgerät, welcher durch mindestens eine gegenüber der Horizontalen und gegenüber der Vertikalen geneigte Rutschbahn 24, 26 für die Kennzeichnungseinheiten 12 begrenzt wird, mit einer am unteren Ende des Fallschachts 22 angeordneten, eine Auflageebene 36 aufspannenden Auflagefläche 34 zum Auflegen einer Kante 32 der Kennzeichnungseinheiten 12, mit einem über die Auflageebene 36 nach oben vorstehenden oder über der Auflageebene 36 angeordneten Anschlagblock 38 und mit einem in einer Vorschubrichtung 42 auf den Anschlagblock 38 zu und von diesem weg beweglichen Gegenhalter 44 zum Andrücken von auf der Auflagefläche 34 aufliegenden Kennzeichnungseinheiten 12 in einer Beschriftungsposition an den Anschlagblock 38.

### Bezugszeichenliste

- 10: Beschriftungsvorrichtung
- 12: Kennzeichnungseinheit
- 14: Deckenwand
- 16: Bodenwand
- 18: Magazin
- 20: Eintrittsöffnung
- 22: Fallschacht
- 24: erste Rutschbahn
- 26: zweite Rutschbahn
- 28: Schwenkachse
- 30: Umlenkpartie
- 32: untere Kante
- 34: Auflagefläche
- 36: Auflageebene
- 38: Anschlagblock
- 40: Anschlagfläche
- 42: Vorschubrichtung
- 44: Gegenhalter
- 46: Beschriftungsebene
- 48: Gegenhalterfläche
- 50: Seitenpartie
- 52: Seitenfläche
- 54: Verbindungskante
- 56: Seitenkante
- 58: unterer Rand
- 60: Auflagerinne
- 62: Kippachse
- 64: Vertiefung
- 68: Aufnahmebehälter

## Patentansprüche

1. Vorrichtung zur Beschriftung von Kennzeichnungseinheiten (12), wobei jede Kennzeichnungseinheit (12) ein Kennzeichnungsschild oder mehrere, einstückig zusammenhängende Kennzeichnungsschilder aufweist, wobei jedes Kennzeichnungsschild eine Beschriftungsfläche aufweist und wobei die Beschriftungsfläche oder mehrere der Beschriftungsflächen jeder Kennzeichnungseinheit (12) eine Beschriftungsebene (46) aufspannt bzw. aufspannen, mit einem Gehäuse (14, 16), mit einem im Gehäuse (14, 16) angeordneten Beschriftungsgerät, insbesondere einem Laserbeschriftungsgerät, **gekennzeichnet durch** folgende zusätzliche Merkmale: ein im Gehäuse (14, 16) angeordneter, über eine Eintrittsöffnung (20) im Gehäuse (14) zugänglicher Fallschacht (22) zum Transport einzelner Kennzeichnungseinheiten (12) zum Beschriftungsgerät, welcher durch mindestens eine gegenüber der Horizontalen und gegenüber der Vertikalen geneigte Rutschbahn (24, 26) für die Kennzeichnungseinheiten (12) begrenzt wird, eine am unteren Ende des Fallschachts (22) angeordnete, eine Auflageebene (36) aufspannende Auflagefläche (34) zum Auflegen einer Kante (32) der Kennzeichnungseinheiten (12), ein über die Auflageebene (36) nach oben vorstehender oder über der Auflageebene (36) angeordneter Anschlagblock (38) und ein in einer Vorschubrichtung (42) auf den Anschlagblock (38) zu und von diesem weg beweglicher Gegenhalter (44) zum Andrücken von auf der Auflagefläche (34) aufliegenden Kennzeichnungseinheiten (12) in einer Beschriftungsposition an den Anschlagblock (38).

2. Vorrichtung nach Anspruch 1, **dadurch gekennzeichnet, dass** der Fallschacht (22) durch zwei in entgegengesetzte Richtungen gegenüber der Vertikalen geneigte Rutschbahnen (24, 26) begrenzt wird, wobei eine erste Rutschbahn (24) unter der Eintrittsöffnung (20) angeordnet ist und sich auf die zweite Rutschbahn (26) zu schräg nach unten erstreckt.

3. Vorrichtung nach Anspruch 2, **dadurch gekennzeichnet, dass** die erste Rutschbahn (24) um eine parallel zur vorzugsweise gehäusefest angeordneten zweiten Rutschbahn (26) horizontal verlaufende gehäusefeste Schwenkachse (28) zur Freigabe und Sperrung einer Umlenkpartie (30) des Fallschachts (22) hin und her verschwenkbar ist.

4. Vorrichtung nach einem der vorangehenden Ansprüche, **dadurch gekennzeichnet, dass** die Auflagefläche (34) durch mehrere im Abstand zueinander und vorzugsweise quer zur Anschlagfläche (40) verlaufende Auflagerippen gebildet wird.

5. Vorrichtung nach einem der vorangehenden Ansprüche, **dadurch gekennzeichnet, dass** der Gegenhalter (44) eine dem Anschlagblock (38) zugewandte Gegenhalterfläche (48) sowie mindestens eine in Richtung zum Anschlagblock (38) vorstehende Seitenpartie (50) aufweist, wobei jede Seitenpartie (50) ausgehend von der Gegenhalterfläche (48) eine Seitenfläche (52) aufweist, die mit der Gegenhalterfläche (48) entlang einer Verbindungskante (54) einen stumpfen Winkel (a) einschließt.

6. Vorrichtung nach einem der Ansprüche 2 bis 5, **dadurch gekennzeichnet, dass** die zweite Rutschbahn (26) an ihrem unteren Rand (58) mit einer Auflagerinne (60) für die Kennzeichnungseinheiten (12) versehen und um eine gehäusefeste horizontale Kippachse (62) in eine Kippstellung kippbar ist, in der die Auflagerinne (60) nach oben weist.

7. Vorrichtung nach Anspruch 6, **dadurch gekennzeichnet, dass** in der Auflagefläche (34) eine Vertiefung (64) zur Aufnahme der Auflagerinne angeordnet (60) ist.

8. Vorrichtung nach Anspruch 6, **dadurch gekennzeichnet, dass** die Auflagefläche (34) in der Auflagerinne (60) angeordnet ist.

9. Vorrichtung zur Beschriftung von Kennzeichnungseinheiten (12), wobei jede Kennzeichnungseinheit (12) ein Kennzeichnungsschild oder mehrere, einstückig zusammenhängende Kennzeichnungsschilder aufweist, wobei jedes Kennzeichnungsschild eine Beschriftungsfläche aufweist und wobei die Beschriftungsfläche oder mehrere der Beschriftungsflächen jeder Kennzeichnungseinheit (12) eine Beschriftungsebene (46) aufspannt bzw. aufspannen, mit einem Gehäuse (14, 16), mit einem im Gehäuse (14, 16) angeordneten Beschriftungsgerät, insbesondere einem Laserbeschriftungsgerät, **gekennzeichnet durch** folgende zusätzliche Merkmale: ein im Gehäuse (14, 16) angeordneter, über eine Eintrittsöffnung (20) im Gehäuse (14) zugänglicher Fallschacht (22) zum Transport einzelner Kennzeichnungseinheiten (12) zum Beschriftungsgerät, welcher durch mindestens eine gegenüber der Horizontalen und gegenüber der Vertikalen geneigte Rutschbahn (24) begrenzt wird, und eine Halteeinrichtung zum Halten der Kennzeichnungseinheiten (12) in einer Beschriftungsposition, die eine gegenüber der Horizontalen geneigte Anlagefläche zum flächigen Anlegen der Kennzeichnungseinheiten (12) und eine sich an den unteren Rand der Anlagefläche anschließende Auflagerinne zum Auflegen einer Kante (32) der Kennzeichnungseinheiten (12) aufweist, wobei sich die mindestens eine Rutschbahn (24) auf die Anlagefläche zu erstreckt und wobei die Halteeinrichtung um eine gehäusefeste horizontale Kippachse in eine Kippstellung kippbar ist, in der die Auflagerinne nach oben weist.

10. Vorrichtung nach Anspruch 8 oder 9, **dadurch gekennzeichnet, dass** die Auflagerinne (60) an ihren beiden Enden mit sich in ihrer Längserstreckung aufeinander zu zu einem Rinnenboden erstreckenden Schrägen versehen ist.

11. Vorrichtung nach einem der Ansprüche 6 bis 10, **dadurch gekennzeichnet, dass** die Auflagerinne (60) aus mehreren, im Abstand zueinander angeordneten Abschnitten besteht.

12. Vorrichtung nach einem der Ansprüche 6 bis 11, **gekennzeichnet durch** einen Aufnahmebehälter (68) für beschriftete Kennzeichnungseinheiten (12), auf den sich die zweite Rutschbahn (26) bzw. die Anlagefläche in der Kippstellung zu erstreckt.

13. Verfahren zur Beschriftung von Kennzeichnungsschildersätzen unter Verwendung einer Vorrichtung nach einem der Ansprüche 1 bis 8, wobei jeder Kennzeichnungsschildersatz (12) eine Vielzahl von einstückig zusammenhängenden Kennzeichnungsschildern sowie mehrere im Abstand zueinander in einer Reihe angeordnete, einstückig mit den Kennzeichnungsschildern verbundene Beschriftungsköpfe aufweist, wobei die Kennzeichnungsschilder und die Beschriftungsköpfe jeweils eine Beschriftungsfläche aufweisen und wobei die Beschriftungsflächen jedes Kennzeichnungsschildersatzes (12) eine Beschriftungsebene (46) aufspannen, **dadurch gekennzeichnet, dass** die Kennzeichnungsschildersätze (12) einzeln über die Eintrittsöffnung (20) in den Fallschacht (22) eingeführt werden und mit den Beschriftungsköpfen voran die mindestens eine Rutschbahn (24, 26) hinunterrutschen, bis sie mit den Beschriftungsköpfen auf der Auflagefläche (34) aufliegen, dass auf der Auflagefläche (34) aufliegende Kennzeichnungsschildersätze (12) mittels des Gegenhalters (44) mit dem Anschlagblock (38) zugewandten Beschriftungsflächen gegen den Anschlagblock (38) in eine Beschriftungsposition gedrückt und mittels des Beschriftungsgeräts beschriftet werden.

14. Verfahren nach Anspruch 13 unter Verwendung einer Vorrichtung nach einem der Ansprüche 2 oder 3, **dadurch gekennzeichnet, dass** die Kennzeichnungsschildersätze (12) beim Übergang von der ersten Rutschbahn (24) zur zweiten Rutschbahn (26) gewendet werden, so dass die Beschriftungsflächen auf der ersten Rutschbahn (24) aufliegen und von der zweiten Rutschbahn (26) wegweisen.

15. Verfahren nach einem der Ansprüche 13 oder 14 unter Verwendung einer Vorrichtung nach Anspruch 4, **dadurch gekennzeichnet, dass** von den Beschriftungsköpfen nach unten abstehende Anspritzpunkte in der Beschriftungsposition jeweils zwischen zwei Auflagerippen positioniert werden.

## Claims

1. Apparatus for inscription of identification units (12), wherein each identification unit (12) has an identification plate or multiple identification plates connected in one piece, wherein each identification plate has an inscription surface and wherein the inscription surface or multiple inscription surfaces of each identification unit (12) span(s) an inscription plane (46), having a housing (14, 16), with an inscription device disposed in the housing (14, 16), particularly a laser inscription device, **characterized by** the following additional features:
a drop shaft (22) for transport of individual identification units (12) to the inscription device, which shaft is disposed in the housing (14, 16) and accessible by way of an entry opening (20) in the housing (14), and is delimited by means of at least one chute (24, 26) for the identification units (12) that is inclined relative to the horizontal and relative to the vertical, a support surface (34) that spans a support plane (36), disposed at the lower end of the drop shaft (22), onto which surface an edge (32) of the identification units (12) is to be laid, a stop block (38) that projects upward beyond the support plane (36) or is disposed above the support plane (36), and a counter-holder (44) that can be moved toward the stop block (38) in an advancing direction (42) and away from the block, for pressing identification units (12) that lie on the support surface (34) against the stop block (38) in an inscription position.

2. Apparatus according to claim 1, **characterized in that** the drop shaft (22) is delimited by two chutes (24, 26) that are inclined relative to the vertical in opposite directions, wherein a first chute (24) is disposed below the entry opening (20) and extends downward at a slant toward the second chute (26).

3. Apparatus according to claim 2, **characterized in that** the first chute (24) can be pivoted back and forth about a pivot axle (28) that runs horizontally parallel to the second chute (26), which pivot axle (28) is preferably fixed in place on the housing, for release and blocking of a deflection part (30) of the drop shaft (22).

4. Apparatus according to one of the preceding claims, **characterized in that** the support surface (34) is formed by multiple support ribs that run at a distance from one another and preferably run transverse to the stop surface (40) .

5. Apparatus according to one of the preceding claims, **characterized in that** the counter-holder (44) has a counter-holder surface (48) that faces the stop block (38), as well as at least one side part (50) that projects in the direction toward the stop block (38), wherein each side part (50), proceeding from the counter-holder surface (48), has a side surface (52) that encloses an obtuse angle (α) with the counter-holder surface (48), along a connection edge (54).

6. Apparatus according to one of claims 2 to 5, **characterized in that** the second chute (26) is provided with a support gutter (60) at its lower edge (58) for the identification units (12), and can be tilted about a tilt axle (62) that runs horizontally and is fixed in place on the housing, into a tilted position in which the support gutter (60) faces upward.

7. Apparatus according to claim 6, **characterized in that** a depression (64) for accommodating the support gutter (60) is disposed in the support surface (34).

8. Apparatus according to claim 6, **characterized in that** the support surface (34) is disposed in the support gutter (60) .

9. Apparatus for inscription of identification units (12), wherein each identification unit (12) has an identification plate or multiple identification plates connected in one piece, wherein each identification plate has an inscription surface and wherein the inscription surface or multiple inscription surfaces of each identification unit (12) span(s) an inscription plane (46), having a housing (14, 16), with an inscription device disposed in the housing (14, 16), particularly a laser inscription device, **characterized by** the following additional features:
a drop shaft (22) for transport of individual identification units (12) to the inscription device, which shaft is disposed in the housing (14, 16) and accessible by way of an entry opening (20) in the housing (14), and is delimited by means of at least one chute (24) that is inclined relative to the horizontal and relative to the vertical, and a holding device for holding the identification units (12) in an inscription position, which device has a contact surface that is inclined relative to the horizontal, for planar contact of the identification units (12), and a support gutter for supporting an edge (32) of the identification units (12), which follows the lower edge of the contact surface, wherein the at least one chute (24) extends toward the contact surface, and wherein the holding device can be tilted about a horizontal tilt axis fixed in place on the housing, into a tilted position in which the support gutter faces upward.

10. Apparatus according to claim 8 or 9, **characterized in that** the support gutter (60) is provided, at its two ends, with slanted parts that extend toward one another in their longitudinal expanse, to a gutter bottom.

11. Apparatus according to one of claims 6 to 10, **characterized in that** the support gutter (60) consists of multiple sections disposed at a distance from one another.

12. Apparatus according to one of claims 6 to 11, **characterized by** an accommodation container (68) for inscribed identification units (12), toward which the second chute (26) or the contact surface extends in the tilted position.

13. Method for inscription of identification plate sets, using an apparatus according to one of claims 1 to 8, wherein each identification plate set (12) has a plurality of identification plates that are connected in one piece, as well as multiple inscription heads connected with the identification plates in one piece, disposed in a row at a distance from one another, wherein the identification plates and the inscription heads have an inscription surface, in each instance, and wherein the inscription surfaces of each identification plate set (12) span an inscription plane (46), **characterized in that** the identification plate sets (12) are individually introduced into the drop shaft (22) by way of the entry opening (20) and slide down the at least one chute (24, 26) with the inscription heads going first, until they lie on the support surface (34) with the inscription heads, that identification plate sets (12) that lie on the support surface (34) are pressed against the stop block (38), into an inscription position, by means of the counter-holder (44), with the inscription surfaces facing the stop block (38), and are inscribed by means of the inscription device.

14. Method according to claim 13, using an apparatus according to one of claims 2 or 3, **characterized in that** the identification plate sets (12) are turned during the transition from the first chute (24) to the second chute (26), so that the inscription surfaces lie on the first chute (24) and face away from the second chute (26).

15. Method according to one of claims 13 or 14, using an apparatus according to claim 4, **characterized in that** in the inscription position, injection points that project downward from the inscription heads are positioned between two support ribs, in each instance.

## Revendications

1. Dispositif dévolu au marquage d'unités de caractérisation (12), chaque unité de caractérisation (12) étant munie d'une plaquette de caractérisation ou de plusieurs plaquettes de caractérisation formant un ensemble unitaire cohérent, sachant que chaque plaquette de caractérisation comporte une surface de traçage d'inscriptions et que ladite surface de traçage d'inscriptions, ou plusieurs surfaces parmi les surfaces de traçage d'inscriptions de chaque unité de caractérisation (12), couvre(nt) l'étendue d'un plan (46) de traçage d'inscriptions, comportant un boîtier (14, 16) associé à un appareil de marquage, notamment à un appareil de marquage au laser logé dans ledit boîtier (14, 16), **caractérisé par** les particularités additionnelles suivantes : un puits de descente (22) qui est affecté au transport d'unités individuelles de caractérisation (12) vers l'appareil de marquage, est situé dans le boîtier (14, 16), est accessible par l'intermédiaire d'une ouverture d'entrée (20) pratiquée dans ledit boîtier (14), et est délimité par au moins une goulotte (24, 26) destinée auxdites unités de caractérisation (12) et inclinée par rapport à l'horizontale et par rapport à la verticale ; une surface d'appui (34) qui est dédiée à la mise en place d'une arête (32) desdites unités de caractérisation (12), est située à l'extrémité inférieure dudit puits de descente (22) et couvre l'étendue d'un plan d'appui (36) ; un bloc de butée (38) saillant vers le haut, au-delà du plan d'appui (36), ou placé au-dessus dudit plan d'appui (36) ; et un taquet d'arrêt (44) mobile vers le bloc de butée (38) et à l'écart de ce dernier, dans une direction d'avance (42), et conçu pour plaquer contre ledit bloc de butée (38), en un emplacement de traçage d'inscriptions, des unités de caractérisation (12) reposant sur ladite surface d'appui (34).

2. Dispositif selon la revendication 1, **caractérisé par le fait que** le puits de descente (22) est délimité par deux goulottes (24, 26) inclinées par rapport à la verticale, dans des directions opposées, sachant que la première goulotte (24) est placée au-dessous de l'ouverture d'entrée (20) et s'étend à l'oblique, vers le bas, en direction de la seconde goulotte (26).

3. Dispositif selon la revendication 2, **caractérisé par le fait que** la première goulotte (24) peut être animée de va-et-vient pivotants autour d'un axe de pivotement (28) faisant corps avec le boîtier et s'étendant, dans le sens horizontal, parallèlement à la seconde goulotte (26) occupant, de préférence, une position fixe sur ledit boîtier, et vue de la libération et du blocage d'une zone déflectrice (30) du puits de descente (22).

4. Dispositif selon l'une des revendications précédentes, **caractérisé par le fait que** la surface d'appui (34) est constituée de plusieurs nervures d'appui s'étendant à distance les unes des autres et, de préférence, transversalement par rapport à la surface de butée (40).

5. Dispositif selon l'une des revendications précédentes, **caractérisé par le fait que** le taquet d'arrêt (44) comprend une surface de contre-appui (48) tournée vers le bloc de butée (38), ainsi qu'au moins une zone latérale (50) faisant saillie en direction dudit bloc de butée (38), chaque zone latérale (50) présentant, à partir de la surface de contre-appui (48), une surface latérale (52) qui décrit un angle obtus (α), avec ladite surface de contre-appui (48), le long d'une arête de liaison (54).

6. Dispositif selon l'une des revendications 2 à 5, **caractérisé par le fait que** la seconde goulotte (26) est pourvue, sur son bord inférieur (58), d'une rigole d'appui (60) dédiée aux unités de caractérisation (12), et est apte à basculer, autour d'un axe horizontal de basculement (62) faisant corps avec le boîtier, pour prendre une position basculée dans laquelle ladite rigole d'appui (60) est orientée vers le haut.

7. Dispositif selon la revendication 6, **caractérisé par le fait qu'**un renfoncement (64) est pratiqué dans la surface d'appui (34), en vue des recevoir la rigole d'appui (60).

8. Dispositif selon la revendication 6, **caractérisé par le fait que** la surface d'appui (34) est située dans la rigole d'appui (60).

9. Dispositif dévolu au marquage d'unités de caractérisation (12), chaque unité de caractérisation (12) étant munie d'une plaquette de caractérisation ou de plusieurs plaquettes de caractérisation formant un ensemble unitaire cohérent, sachant que chaque plaquette de caractérisation comporte une surface de traçage d'inscriptions et que ladite surface de traçage d'inscriptions, ou plusieurs surfaces parmi les surfaces de traçage d'inscriptions de chaque unité de caractérisation (12), couvre(nt) l'étendue d'un plan (46) de traçage d'inscriptions, comportant un boîtier (14, 16) associé à un appareil de marquage, notamment à un appareil de marquage au laser logé dans ledit boîtier (14, 16), **caractérisé par** les particularités additionnelles suivantes : un puits de descente (22) qui est affecté au transport d'unités individuelles de caractérisation (12) vers l'appareil de marquage, est situé dans le boîtier (14, 16), est accessible par l'intermédiaire d'une ouverture d'entrée (20) pratiquée dans ledit boîtier (14), et est délimité par au moins une goulotte (24) inclinée par rapport à l'horizontale et par rapport à la verticale ; et un système de retenue qui est conçu pour retenir les unités de caractérisation (12) en un emplacement de traçage d'inscriptions, et comporte une surface de contact inclinée par rapport à l'horizontale, pour offrir un contact à plat auxdites unités de caractérisation (12), et une rigole d'appui se rattachant au bord inférieur de ladite surface de contact, en vue de la mise en place d'une arête (32) desdites unités de caractérisation (12), sachant que la goulotte (24) à présence minimale s'étend en direction de ladite surface de contact et que ledit système de retenue est apte à basculer, autour d'un axe horizontal de basculement faisant corps avec le boîtier, pour prendre une position basculée dans laquelle ladite rigole d'appui est orientée vers le haut.

10. Dispositif selon la revendication 8 ou 9, **caractérisé par le fait que** la rigole d'appui (60) est pourvue, à ses deux extrémités, de rampes s'étendant l'une en direction de l'autre suivant leur étendue longitudinale, vers un fond de ladite rigole.

11. Dispositif selon l'une des revendications 6 à 10, **caractérisé par le fait que** la rigole d'appui (60) est composée de plusieurs tronçons placés à distance les uns des autres.

12. Dispositif selon l'une des revendications 6 à 11, **caractérisé par** un réceptacle (68) destiné à des unités de caractérisation (12) revêtues d'inscriptions, en direction duquel la seconde goulotte (26) ou la surface de contact s'étend, respectivement, dans la position basculée.

13. Procédé de marquage de jeux de plaquettes de caractérisation, faisant usage d'un dispositif conforme à l'une des revendications 1 à 8, chaque jeu de plaquettes de caractérisation (12) comprenant une multiplicité de plaquettes de caractérisation formant un ensemble unitaire cohérent, ainsi que plusieurs têtes de marquage agencées en une rangée, à distance les unes des autres, et reliées d'un seul tenant auxdites plaquettes de caractérisation, sachant que lesdites plaquettes de caractérisation et lesdites têtes de marquage sont respectivement dotées d'une surface de traçage d'inscriptions, et que les surfaces de traçage d'inscriptions de chaque jeu de plaquettes de caractérisation (12) couvrent l'étendue d'un plan (46) de traçage d'inscriptions, **caractérisé par le fait que** les jeux de plaquettes de caractérisation (12) sont introduits individuellement dans le puits de descente (22) par l'intermédiaire de l'ouverture d'entrée (20) et glissent vers le bas sur la goulotte (24, 26) à présence minimale, avec les têtes de marquage en position frontale, jusqu'à ce qu'ils reposent sur la surface d'appui (34) par lesdites têtes de marquage ; et **par le fait que** des jeux de plaquettes de caractérisation (12), reposant sur ladite surface d'appui (34), sont plaqués contre le bloc de butée (38) jusqu'à un emplacement de traçage d'inscriptions, au moyen du taquet d'arrêt (44), avec des surfaces de traçage d'inscriptions tournées vers ledit bloc de butée (38), puis sont revêtus d'inscriptions au moyen de l'appareil de marquage.

14. Procédé selon la revendication 13, faisant usage d'un dispositif conforme à l'une des revendications 2 ou 3, **caractérisé par le fait que** les jeux de plaquettes de caractérisation (12) sont retournés, lors du passage de la première goulotte (24) à la seconde goulotte (26), de façon telle que les surfaces de traçage d'inscriptions reposent sur ladite première goulotte (24) et pointent à l'opposé de ladite seconde goulotte (26).

15. Procédé selon l'une des revendications 13 ou 14, faisant usage d'un dispositif conforme à la revendication 4, **caractérisé par le fait que** des points d'injection, dépassant vers le bas au-delà des têtes de marquage, sont respectivement positionnés entre deux nervures d'appui à l'emplacement de traçage d'inscriptions.
